# EUROPÄISCHE PATENTSCHRIFT

(11) **EP 2 027 578 B1**
(45) Veröffentlichungstag und Bekanntmachung des Hinweises auf die Patenterteilung: **06.10.2010**
(21) Anmeldenummer: 07725517.2
(22) Anmeldetag: 24.05.2007
(51) Int. Cl.: G10K 9/122, G10K 9/22, G01S 7/521, G01S 15/93

(54) **ULTRASCHALLSENSOR MIT MEMBRAN**
ULTRASOUND SENSOR WITH MEMBRANE
CAPTEUR À ULTRASONS AVEC MEMBRANE

(30) Priorität: 14.06.2006 DE 102006028211
(43) Veröffentlichungstag der Anmeldung: 25.02.2009
(73) Patentinhaber: Valeo Schalter und Sensoren GmbH, 74321 Bietigheim-Bissingen (DE)
(72) Erfinder: JUNG, Thomas, 74074 Heilbronn (DE); WEHLING, Hans-Wilhelm, 74074 Heilbronn (DE); KUPFERNAGEL, Uwe, 71665 Vaihingen (DE); GRÜDL, Dietmar, 71679 Asperg (DE); GOTZIG, Heinrich, 74081 Heilbronn (DE)
(86) Internationale Anmeldenummer: PCT/EP2007/004619
(87) Internationale Veröffentlichungsnummer: WO 2007/144063

(56) Entgegenhaltungen:
- EP-A- 1 260 965
- WO-A-99/30313
- DE-A1- 4 329 055
- DE-C1- 19 927 797

## Beschreibung

Die Erfindung betrifft einen Ultraschallsensor, insbesondere einen Kraftfahrzeug-Ultraschallsensor, mit einem Gehäuse, mit einer in oder an einem Abschnitt des Gehäuses gelagerten Membran, die einen Membranboden und einen sich an den Membranboden anschließenden, im Wesentlichen zylindrischen Wandabschnitt aufweist, wobei an oder in dem Wandabschnitt der Membran mindestens ein Zusatzelement angeordnet ist und wobei das Zusatzelement und der Membranboden aus unterschiedlichen Materialien gebildet sind.

Derartige Ultraschallsensoren sind bereits aus den Druckschriften DE 199 27 797 C1, DE 43 29 055 A1, EP 1 260 965 A sowie WO 99/30313 A bekannt.

Die Membran eines solchen Ultraschallsensors weist üblicherweise einen Membranboden auf, der mit Hilfe eines Piezo-Elements in Schwingungen versetzt werden kann, so dass in die Umgebung des Ultraschallsensors Ultraschallsignale abgestrahlt werden können. Von Hindernissen reflektierte Ultraschallsignale können von dem Ultraschallsensor wieder empfangen und verarbeitet werden.

Um ein definiertes Schwingen der Membran beziehungsweise des Membranbodens zu erreichen, ist die Membran üblicherweise nicht unmittelbar mit dem Gehäuse des Ultraschallsensors verbunden, sondern kann von einem Entkopplungsmaterial umgeben sein, das nach radial außen an einen ringförmigen Gehäuseabschnitt des Ultraschallsensorgehäuses grenzt. Darüber hinaus können auch im Hohlquerschnitt der Membran Dämpfungselemente vorgesehen sein.

Mit Hilfe des Entkopplungselements und der Dämpfungselement kann die Membran weitestgehend schwingungstechnisch von dem Gehäuse des Ultraschallsensors entkoppelt werden. Dennoch besteht Bedarf, das Schwingungsverhalten des eingangs genannten Ultraschallsensors weiter zu verbessern.

Hiervon ausgehend liegt der vorliegenden Erfindung die Aufgabe zugrunde, einen Ultraschallsensor mit einem optimalen Schwingungsverhalten bereitzustellen.

Diese Aufgabe wird gemäß Anspruch 1 erfindungsgemäß dadurch gelöst, dass das an oder in dem Wandabschnitt der Membran vorgesehene Zusatzelement zumindest anteilig aus Stahl oder zumindest anteilig aus einem keramischen Werkstoff gebildet ist, wobei das Zusatzelement und der Wandabschnitt miteinander verpresst sind. Auf diese Weise kann der Wandabschnitt versteift werden, was die Einleitung von Schwingungen in dem Wandabschnitt minimiert.

Das Zusatzelement ermöglicht es, dass Schwingungsverhalten der Membran zu beeinflussen. Somit kann einerseits das Schwingungsverhalten des Membranbodens optimiert werden und andererseits das Schwingungsverhalten des Wandabschnitts der Membran. Somit ist es möglich, den Membranboden so auszulegen, dass er besonders leicht in Schwingung versetzt werden kann, sodass Ultraschallsignale erzeugt werden können. Der Wandabschnitt hingegen kann mit Hilfe des stabilisierend wirkenden Zusatzelements so beeinflusst werden, dass er nicht oder nur sehr geringfügig in Schwingung versetzt werden kann. Auf diese Weise ist es möglich, zu verhindern, dass sich Schwingungen aus dem Wandabschnitt der Membran, ggf. über das oben genannte Entkopplungsmaterial hinweg, in das Gehäuse und von dort in entgegengesetzte Richtung zurück auf die Membran übertragen können. Eine solche unerwünschte Schwingungsübertragung kann zur Folge haben, dass bei entsprechend starken Schwingungen des Gehäuses eine Rückkopplung in die Membran bewirkt, dass diese Rückkopplung zu Fehlmessungen, also zur Erfassung von Scheinhindernissen, führt.

Weiterhin wird vorgeschlagen, dass der Membranboden aus einem Material gebildet ist, das eine andere, insbesondere eine höhere Dichte aufweist, als das Material, das das Zusatzelement bildet. Auf diese Weise kann die Trägheit des Wandabschnitts der Membran erhöht werden, sodass sich der Wandabschnitt weniger leicht in Schwingung versetzen lässt.

Wenn der Membranboden zumindest anteilig aus Aluminium gebildet ist, lässt sich dieser mit Hilfe des Piezo-Elements besonders leicht in Schwingung versetzen, da Aluminium leicht ist und einen vergleichsweise geringen Verformungswiderstand aufweist.

Nach einer vorteilhaften Ausführungsform der Erfindung ist das Zusatzelement ringförmig ausgebildet. Auf diese Weise kann der Wandabschnitt der Membran in einer zu der Abstrahlrichtung des Ultraschallsensors im Wesentlichen senkrechten Ebene gleichmäßig verstärkt werden, sodass die Beeinflussung des Schwingungsverhaltens der Membran in gleichmäßiger Weise beeinflusst wird.

Das Zusatzelement kann im Querschnitt kreisförmig oder rechteckförmig sein. Mit einem im Querschnitt kreisförmigen Zusatzelement lässt sich bei einem vergleichsweise geringen Materialeinsatz eine hohe Versteifungswirkung erzielen. Ein im Querschnitt rechtseckförmiges Zusatzelement lässt sich besonders einfach mit dem Wandabschnitt der Membran fügen, wie dies weiter unten noch detaillierter beschrieben ist.

Eine bevorzugte Ausführungsform der Erfindung sieht vor, dass das Zusatzelement durch einen Sprengring gebildet ist. Ein Sprengring steht als Massenteil zur Verfügung und ist daher besonders preisgünstig. Der Sprengring kann in einer an dem Wandabschnitt ausgebildeten Nut gelagert sein. Der Sprengring kann bezüglich des Wandabschnitts radial außen oder radial innen angeordnet sein. Selbstverständlich können auch mehrere Sprengringe vorgesehen sein, von denen beispielsweise ein Sprengring radial außen und ein Sprengring radial innen angeordnet ist. Gleiches gilt für Zusatzelemente, die nicht als Sprengring ausgebildet sind.

Das Zusatzelement und der Wandabschnitt sind miteinander verpresst, beispielsweise indem eines der genannten Bauteile auf das andere aufgeschrumpft wird. Beispielsweise kann ein ringförmiges, radial außen angeordnetes Zusatzelement erhitzt werden, um auf einen Wandabschnitt aufgeschoben werden. Nach Abkühlung des Zusatzelements ist dieses auf den Wandabschnitt aufgeschrumpft.

Das Zusatzelement kann sich in axialer Richtung des Wandabschnitts von einem dem Membranboden abgewandten Ende der Membran in Richtung auf den Membranboden erstrecken. Auf diese Weise kann die Membran in einem Bereich versteift werden, in dem die Einkopplung von Schwingungen besonders unerwünscht ist, da dieser Bereich räumlich benachbart zu dem Abschnitt des Gehäuses des Ultraschallsensors liegt, in dem die Membran gelagert ist.

Das Zusatzelement kann sich in axialer Richtung des Wandabschnitts auch von dem Membranboden in Richtung auf das dem Membranboden abgewandte Ende der Membran erstrecken. Auf diese Weise kann die Membran auch in einem direkt zu dem Membranboden benachbarten Bereich versteift werden. Wenn sich das Zusatzelement dabei bis zu dem Ende der Membran hin erstreckt, kann der gesamte Wandabschnitt versteift oder verstärkt werden.

Dies ist auch möglich, wenn das Zusatzelement selbst den Wandabschnitt bildet. Eine solche Membran besteht also aus einem Zusatzelement, dass den im Wesentlichen zylindrischen Wandabschnitt bildet, an den sich der Membranboden anschließt.

Weitere Vorteile, Merkmale und Einzelheiten der Erfindung ergeben sich aus der nachfolgenden Beschreibung, in der unter Bezugnahme auf die Zeichnung besonders bevorzugte Ausführungsbeispiele im Einzelnen beschrieben sind. Dabei können die in der Zeichnung gezeigten sowie in den Ansprüchen sowie in der Beschreibung erwähnten Merkmale jeweils einzeln für sich oder in beliebiger Kombination erfindungswesentlich sein.

In der Zeichnung zeigen:
- Figur 1: eine perspektivische Ansicht eines erfindungsgemäßen Ultraschallsensors;
- Figur 2: einen Ausschnitt einer geschnittenen Seitenansicht des Ultraschallsensors gemäß Figur 1 entsprechend einer ersten Ausführungsform; und
- Figur 3: einen Ausschnitt einer geschnittenen Seitenansicht des Ultraschallsensors gemäß Figur 1 entsprechend einer zweiten Ausführungsform.

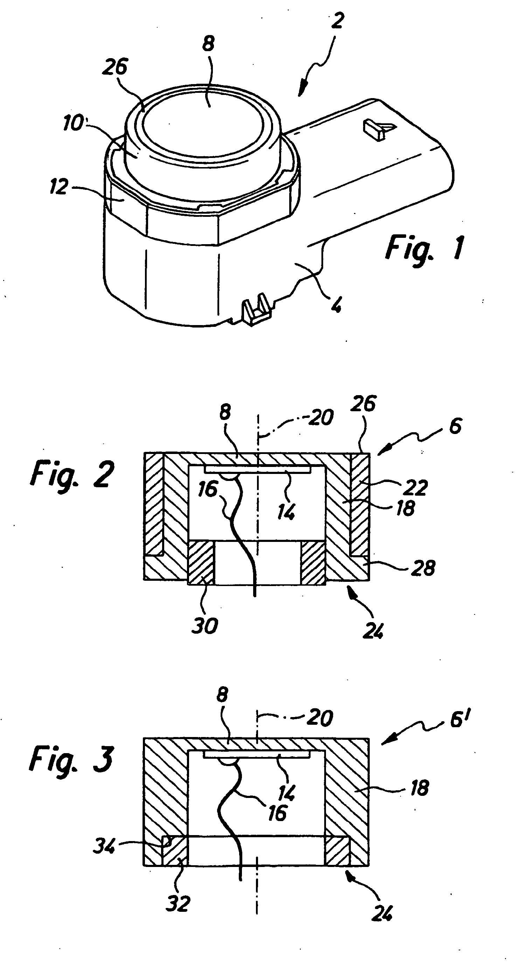

In Figur 1 ist ein Ultraschallsensor insgesamt mit dem Bezugszeichen 2 bezeichnet. Dieses weist ein in etwa topfförmiges Gehäuse 4 auf. An dem Gehäuse 4 ist eine im Wesentlichen zylindrisch ausgebildete Membran 6 gelagert, die einen scheibenförmigen Membranboden 8 aufweist (vgl. auch Figuren 2 und 3). Die Membran 6 ist radial außen von einem ringförmigen Entkopplungselement 10 umgeben, das die Membran 6 schwingungstechnisch von dem Gehäuse 4 entkoppelt. Das Entkopplungselement 10 ist gehäuseseitig an einem ringförmigen Gehäuseabschnitt 12 gelagert, der einen dem Gehäuse 4 zugewandten Teil des Entkopplungselements 10 radial außen umgibt.

An der dem Gehäuse 4 zugewandten Seite des Membranbodens 8 ist ein Piezo-Element 14 angeordnet, das über eine elektrische Kontaktierung 16 mit Spannung versorgt werden kann. Durch den Piezo-Effekt kontrahiert sich dieses bzw. dehnt sich aus und versetzt den Membranboden 8 in Schwingung, so dass Ultraschallsignale erzeugt werden.

Die in Figur 2 dargestellte Membran 6 weist einen sich an den Membranboden 8 anschließenden, im Wesentlichen zylindrischen Wandabschnitt 18 auf. Die Mittelachse des zylindrischen Wandabschnitts 18 entspricht einer axialen Richtung des Ultraschallsensors 2, die in Figur 2 mit dem Bezugszeichen 20 bezeichnet ist.

Die Membran 6 gemäß Figur 2 weist ein ringförmiges, im Wesentlichen zylindrisches Zusatzelement 22 auf, das relativ zu dem Wandabschnitt 18 radial außen angeordnet ist. Das Zusatzelement 22 weist eine ringförmige Stirnfläche 26 auf, die auch in Figur 1 sichtbar ist. Das Zusatzelement 22 erstreckt sich in axialer Richtung 20 von dem Membranboden 8 in Richtung auf ein mit 24 bezeichnetes Ende der Membran 6. Benachbart zu diesem Ende 24 ist das Zusatzelement 22 an einem nach radial außen weisenden Absatz 28 des Wandabschnitts 18 gelagert.

Die Membran 6 gemäß Figur 2 weist ferner ein Zusatzelement 30 auf, dass relativ zu dem Wandabschnitt 18 radial innen angeordnet ist und in axialer Richtung 20 benachbart zu dem Ende 24 der Membran 6 angeordnet ist.

Der Membranboden 8 sowie der Wandabschnitt 18 und der Absatz 28 der Membran 6 sind aus Aluminium oder einer Aluminiumlegierung gebildet. Das Zusatzelement 22 und das Zusatzelement 30 sind aus Stahl oder einer Stahllegierung gebildet und jeweils über einen Presssitz mit dem Wandabschnitt 18 der Membran 6 verbunden. Die Zusatzelemente 22 und 30 sind im Querschnitt rechteckförmig.

Die in Figur 3 dargestellte Membran 6' ist ähnlich zu der mit Bezug auf Figur 2 beschriebenen Membran 6 aufgebaut. Daher soll im Folgenden nur auf die Unterschiede zwischen der Membran 6 und der Membran 6' eingegangen werden. Die Membran 6' weist benachbart zu ihrem Ende 24 ein bezüglich des Wandabschnitts 18 radial innen angeordnetes Zusatzelement 32 auf. Dies ist in eine komplementär ausgebildete, ringschulterförmige Aufnahme 34 eingepresst, die an dem Ende 24 der Membran 6' ausgeformt ist.

## Patentansprüche

1. Ultraschallsensor (2), insbesondere Kraftfahrzeug-Ultraschallsensor, mit einem Gehäuse (4), mit einer in oder an einem Abschnitt (12) des Gehäuses (4) gelagerten Membran (6), die einen Membranboden (8) und einen sich an den Membranboden (8) anschließenden, im Wesentlichen zylindrischen Wandabschnitt (18) aufweist, wobei an oder in dem Wandabschnitt (18) der Membran (6) mindestens ein Zusatzelement (22, 30, 32) angeordnet ist und wobei das Zusatzelement (22, 30, 32) und der Membranboden (8) aus unterschiedlichen Materialien gebildet sind, **dadurch gekennzeichnet, dass** das Zusatzelement (22, 30, 32) zumindest anteilig aus Stahl oder zumindest anteilig aus einem keramischen Werkstoff gebildet ist, wobei das Zusatzelement (22, 30, 32) und der Wandabschnitt (18) miteinander verpresst sind.

2. Ultraschallsensor (2) nach Anspruch 1, **dadurch gekennzeichnet, dass** der Membranboden (8) zumindest anteilig aus Aluminium gebildet ist.

3. Ultraschallsensor (2) nach mindestens einem der vorhergehenden Ansprüche, **dadurch gekennzeichnet, dass** das Zusatzelement (22, 30, 32) ringförmig ausgebildet ist.

4. Ultraschallsensor (2) nach mindestens einem der vorhergehenden Ansprüche, **dadurch gekennzeichnet, dass** das Zusatzelement (22, 30, 32) im Querschnitt kreisförmig ist.

5. Ultraschallsensor (2) nach mindestens einem der vorhergehenden Ansprüche, **dadurch gekennzeichnet, dass** das Zusatzelement (22, 30, 32) im Querschnitt rechteckförmig ist.

6. Ultraschallsensor (2) nach mindestens einem der vorhergehenden Ansprüche, **dadurch gekennzeichnet, dass** das Zusatzelement (22, 30, 32) durch einen Sprengring gebildet ist.

7. Ultraschallsensor (2) nach mindestens einem der vorhergehenden Ansprüche, **dadurch gekennzeichnet, dass** das Zusatzelement (30, 32) relativ zu dem Wandabschnitt (18) radial innen angeordnet ist.

8. Ultraschallsensor (2) nach mindestens einem der vorhergehenden Ansprüche, **dadurch gekennzeichnet, dass** das Zusatzelement (22) relativ zu dem Wandabschnitt (18) radial außen angeordnet ist.

9. Ultraschallsensor (2) nach mindestens einem der vorhergehenden Ansprüche, **dadurch gekennzeichnet, dass** sich das Zusatzelement (22, 30, 32) in axialer Richtung (20) des Wandabschnitts (18) von einem dem Membranboden (8) abgewandten Ende (24) der Membran (6) in Richtung auf den Membranboden (8) erstreckt.

10. Ultraschallsensor (2) nach mindestens einem der vorhergehenden Ansprüche, **dadurch gekennzeichnet, dass** sich das Zusatzelement (22) in axialer Richtung (20) des Wandabschnitts (18) von dem Membranboden (8) in Richtung auf das dem Membranboden (8) abgewandte Ende (24) der Membran (6) erstreckt.

## Claims

1. Ultrasonic sensor (2) in particular a motor vehicle ultrasonic sensor, comprising a housing (4), and a diaphragm (6), which is supported in or on a section (12) of the housing (4) and which has a diaphragm base (8) and a substantially cylindrical wall section (18) adjoining the diaphragm base (8), at least one auxiliary element (22, 30, 32) being arranged on or in the wall section (18) of the diaphragm (6), and the auxiliary element (22, 30, 32) and the diaphragm base (8) being formed from different materials, **characterized in that** the auxiliary element (22, 30, 32) is formed at least partially from steel or at least partially from a ceramic material, the auxiliary element (22, 30, 32) and the wall section (18) being pressed together.

2. Ultrasonic sensor (2) according to Claim 1, **characterized in that** the diaphragm base (8) is formed at least partially from aluminium.

3. Ultrasonic sensor (2) according to at least one of the preceding claims, **characterized in that** the auxiliary element (22, 30, 32) is of annular design shape.

4. Ultrasonic sensor (2) according to at least one of the preceding claims, **characterized in that** the auxiliary element (22, 30, 32) is of circular cross section.

5. Ultrasonic sensor (2) according to at least one of the preceding claims, **characterized in that** the auxiliary element (22, 30, 32) is of rectangular cross section.

6. Ultrasonic sensor (2) according to at least one of the preceding claims, **characterized in that** the auxiliary element (22, 30, 32) is formed by a retainer ring.

7. Ultrasonic sensor (2) according to at least one of the preceding claims, **characterized in that** the auxiliary element (30, 32) is arranged radially inside the wall section (18).

8. Ultrasonic sensor (2) according to at least one of the preceding claims, **characterized in that** the auxiliary element (22) is arranged radially outside the wall section (18).

9. Ultrasonic sensor (2) according to at least one of the preceding claims, **characterized in that** the auxiliary element (22, 30, 32) extends in an axial direction (20) of the wall section (18) from an end (24) of the diaphragm (6) remote from the diaphragm base (8) towards the diaphragm base (8).

10. Ultrasonic sensor (2) according to at least one of the preceding claims, **characterized in that** the auxiliary element (22) extends in an axial direction (20) of the wall section (18) from the diaphragm base (8) towards the end (24) of the diaphragm (6) remote from the diaphragm base (8).

## Revendications

1. Détecteur à ultrasons (2), notamment détecteur à ultrasons pour véhicule automobile, comprenant un boîtier (4) avec une membrane (6) logé dans ou sur une section (12) du boîtier (4), laquelle présente un fond de membrane (8) et une section de paroi (18) essentiellement cylindrique qui vient se rattacher au fond de membrane (8), au moins un élément supplémentaire (22, 30, 32) étant disposé sur ou dans la section de paroi (18) de la membrane (6) et l'élément supplémentaire (22, 30, 32) et le fond de membrane (8) étant constitués de matériaux différents, **caractérisé en ce que** l'élément supplémentaire (22, 30, 32) est composé au moins partiellement d'acier ou au moins partiellement d'un matériau céramique, l'élément supplémentaire (22, 30, 32) et la section de paroi (18) étant comprimés l'un contre l'autre.

2. Détecteur à ultrasons (2) selon la revendication 1, **caractérisé en ce que** le fond de membrane (8) est au moins partiellement composé d'aluminium.

3. Détecteur à ultrasons (2) selon au moins l'une des revendications précédentes, **caractérisé en ce que** l'élément supplémentaire (22, 30, 32) est réalisé avec une forme annulaire.

4. Détecteur à ultrasons (2) selon au moins l'une des revendications précédentes, **caractérisé en ce que** l'élément supplémentaire (22, 30, 32) présente une section transversale circulaire.

5. Détecteur à ultrasons (2) selon au moins l'une des revendications précédentes, **caractérisé en ce que** l'élément supplémentaire (22, 30, 32) présente une section transversale rectangulaire.

6. Détecteur à ultrasons (2) selon au moins l'une des revendications précédentes, **caractérisé en ce que** l'élément supplémentaire (22, 30, 32) est formé par un circlip.

7. Détecteur à ultrasons (2) selon au moins l'une des revendications précédentes, **caractérisé en ce que** l'élément supplémentaire (30, 32) est disposé à l'intérieur dans le sens radial par rapport à la section de paroi (18).

8. Détecteur à ultrasons (2) selon au moins l'une des revendications précédentes, **caractérisé en ce que** l'élément supplémentaire (22) est disposé à l'extérieur dans le sens radial par rapport à la section de paroi (18).

9. Détecteur à ultrasons (2) selon au moins l'une des revendications précédentes, **caractérisé en ce que** l'élément supplémentaire (22, 30, 32) s'étend dans le sens axial (20) de la section de paroi (18) d'une extrémité (24) de la membrane (6) à l'opposé du fond de la membrane (8) en direction du fond de la membrane (8).

10. Détecteur à ultrasons (2) selon au moins l'une des revendications précédentes, **caractérisé en ce que** l'élément supplémentaire (22) s'étend dans le sens axial (20) de la section de paroi (18) du fond de la membrane (8) en direction de l'extrémité (24) de la membrane (6) à l'opposé du fond de la membrane (8).
